**Europäisches Patentamt**

**European Patent Office**

**Office européen des brevets**

(19)

(11) Veröffentlichungsnummer: **0 121 829**

**B1**

(12)

# EUROPÄISCHE PATENTSCHRIFT

(45) Veröffentlichungstag der Patentschrift:
20.05.87

(51) Int. Cl.⁴: **F 16 C 32/06**

(21) Anmeldenummer: **84102914.3**

(22) Anmeldetag: **16.03.84**

(54) **Lagerkörper für Luftlagerungen.**

(30) Priorität. **30.03.83 CH 1774/83**

(43) Veröffentlichungstag der Anmeldung:
**17.10.84 Patentblatt 84/42**

(45) Bekanntmachung des Hinweises auf die Patenterteilung:
**20.05.87 Patentblatt 87/21**

(84) Benannte Vertragsstaaten:
**CH DE FR GB IT LI SE**

(56) Entgegenhaltungen:
**CH-A-549 736
DE-A-2 616 918
DE-A-3 124 166
FR-A-1 547 132
FR-A-2 337 832
GB-A-794 902
US-A-3 232 680**

(73) Patentinhaber: **Wyler AG Wasserwaagen und Messwerkzeuge, Im Hölderli, CH- 8405 Winterthur (CH)**

(72) Erfinder: **Stauber, Siegfried T., Hüttenkopfstrasse 32, CH- 8051 Zürich (CH)**

(74) Vertreter: **Quehl, Horst Max, Dipl.- Ing., Glattalstrasse 37 Postfach A-165, CH- 8052 Zürich (CH)**

EP 0 121 829 B1

## Beschreibung

Luftlager ermöglichen bekanntlich eine kontaktfreie Lagerung, so dass kein Verschleiss auftritt und keine nennenswerte Lagerreibung vorhanden ist. Aufgrund ihrer Eigenschaften werden sie vorteilhaft auch an den Schlittenführungen der Meßschlitten von Koordinatenmessmaschinen angewandt. Die Genauigkeit der Führung der Meßschlitten ist dabei von der Höhe des Luftspaltes zwischen der Lagerfläche des Lagerkörpers und der Lagergegenfläche der Schlittenführung abhängig, so dass diese möglichst konstant zu halten ist. Die Konstanz der Höhe des Luftspaltes ist abhängig von der Genauigkeit der Druckregelung der Luftzufuhr sowie der Genauigkeit der feinbearbeiteten Lagerflächen. Eine genaue Schlittenführung erfordert ausserdem bei Verwendung der bekannten Luftlager, dass der Schlitten nicht nur durch die Schwerkraft des Schlittens aufnehmende Lager gelagert wird, sondern auch in Richtung entgegen der Schwerkraft durch zusätzliche Lager gelagert ist, so dass sich die Schlittenführung durch das Zusammenwirken mehrerer in verschiedenen Belastungsrichtungen angeordneter Lager ergibt. Die ideale Gleichgewichtslage des Schlittens muss dann durch die Steuerung der Luftmengen zu den einzelnen Lagern erreicht werden, und je höher der dabei verwendete Luftdruck ist, desto stabiler bzw. härter ist die Lagerung. Ohne das Zusammen- bzw. Gegeneinanderwirken mehrerer Luftlager haben die bekannten Luftlager einen zu ungenauen bzw. weichen Arbeitspunkt, der der sich einstellenden Höhe des Luftspaltes bzw. der sich ergebenden Position des zu lagernden Körpers entspricht. Eine Verschiebung des Arbeitspunktes der bekannten Luftlager ist bereits aufgrund geringer Ungenauigkeiten der Lagerflächen möglich und ergibt sich sogar durch die Luftstauwirkung aufgrund der relativen Verschiebebewegung zwischen den Lagerkörpern und der Gegenfläche der Schlittenführung bei Bewegung des Meßschlittens. Diese Stauwirkung führt zu einem Kippen des Lagers, da sie eine Verschiebung des zentralen Druckpunktes des Lagers bewirkt.

Durch die CH-A-549 736 ist ein selbstdruckerzeugendes Axial-Gasschwebelager bekannt, dessen Lagerkörper mehrere von innen nach aussen verlaufende Spiralrillen aufweist, die bei einer bestimmten Drehzahl aufgrund ihrer Förderwirkung einen ausreichenden Gasdruck erzeugen, so dass nur in der Hochlaufphase von aussen ein Druckgas zuzuspeisen ist.

Die Anwendung von Spiralrillen für die Luftverteilung an einem translatorisch bewegten Lagerkörper, die sich in Umfangsrichtung nur um einen Winkel von wesentlich weniger als 360° erstrecken, führt zu einer ungleichmässigen Luftverteilung, wenn aufgrund von Fertigungsungenauigkeiten oder Beschädigungen an der Lagerfläche sich in einzelnen der Spiralrillen ein unterschiedlicher Staudruck ausbildet.

Der Erfindung liegt die Aufgabe zugrunde, einen Lagerkörper für Luftlagerungen zu finden, durch den die beschriebenen Nachteile vermieden werden, indem er eine gleichmässigere Luftverteilung im Luftspalt zwischen den Lagerflächen des Luftlagers, unbeeinflusst von eventuellen Ungenauigkeiten der Lagerflächen und dem Staudruck aufgrund einer translatorischen Bewegung des Lagerkörpers, gewährleistet.

Eine weitere Verbesserung der Steifigkeit des Lagers und der Möglichkeit, den Luftspalt zwischen den Lagerflächen zu verringern, ergibt sich in vorteilhafter Ausgestaltung der Erfindung durch eine zur Luftzuführungsöffnung konzentrische, die Lagerfläche kanalförmig umschliessende, an einer Unterdruckquelle anschliessbare Luftabführungsöffnung. Die sich dadurch ergebende Kombination zwischen Ueber- und Unterdruck im Luftlager stabilisiert die Luftdurchströmung des Lagers, und es ergibt sich ein genauerer Arbeitspunkt des Lagers bzw. eine höhere Lagersteifigkeit. Ein solches Lager gestattet es auch, für die Führung eines Meßschlittens weniger Luftlager zu verwenden, um eine genaue Führung zu erhalten, bzw. es ist nicht eine zusätzliche Luftlagerung mit einer Druckrichtung erforderlich, die einem anderen Lager entgegengesetzt ist, um eine ausreichend steife Lagerung zu erhalten. Die mögliche Verringerung der Anzahl der Luftlager führt zu einer wesentlichen Kosteneinsparung, da die Herstellung der Lagerkörper aufgrund der erforderlichen Präzision aufwendig ist.

Im folgenden wird die Erfindung anhand eines in der Zeichnung dargestellten Ausführungsbeispiels weiter erläutert. Es zeigt:

Fig. 1 einen Axialschnitt durch einen Lagerkörper für Luftlagerungen,

Fig. 2 einen Axialquerschnitt durch eine zweite Ausführungsform eines Lagerkörpers für Luftlagerungen mit einer ringförmigen Luftabführungsöffnung, und

Fig. 3 einen Radialschnitt entlang der Linie III-III der Fig. 2.

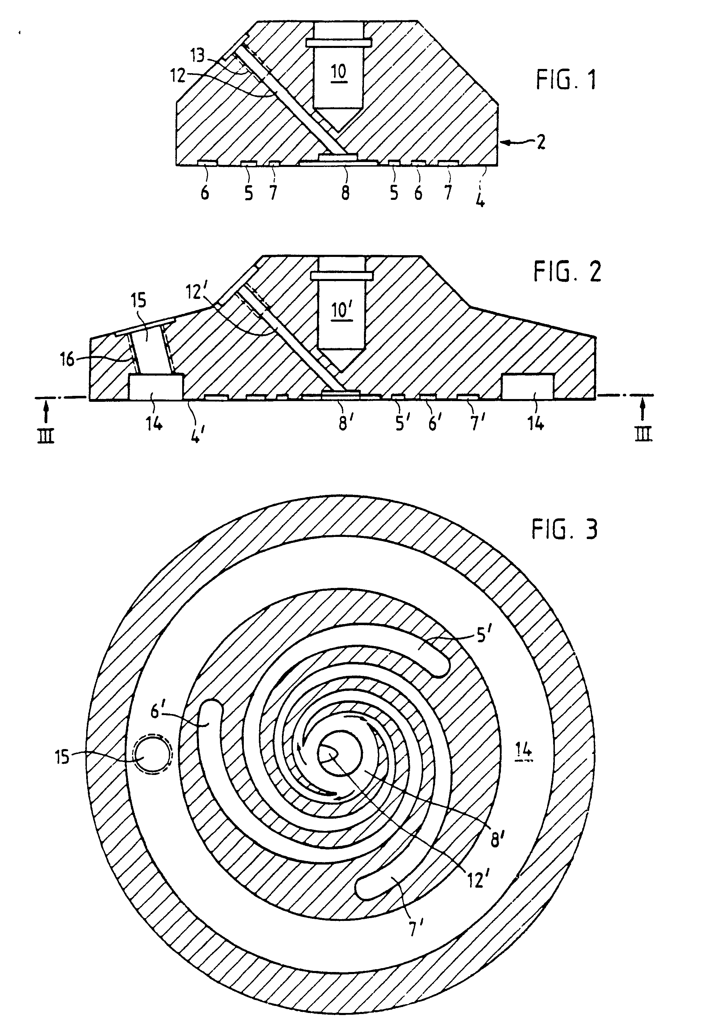

Der Lagerkörper 2 nach Fig. 1 unterscheidet sich von einem Lagerkörper bekannter Art durch in seiner Lagerfläche 4 vorgesehene Luftführungskanäle 5, 6, 7, die ausgehend von einer abgestuften flachen Luftzuführmündung 8 sich in Form von logarithmischen Spiralen nach aussen erstrecken, um in Abstand vom äusseren Umfang der Lagerfläche zu enden. Der Verlauf dieser Luftführungskanäle entspricht beispielsweise demjenigen des Ausführungsbeispiels nach den Fig. 2 und 3 und ist aus der Darstellung der Fig. 3 ersichtlich. Eine zentrale Bohrung 10 dient der Befestigung des Lagerkörpers an einem zu lagernden Körper, wie z.B. dem Meßschlitten einer Mehrkoordinatenmessmaschine. Ein schräg durch den Lagerkörper 2 geführter Luftzuführungskanal 12 endet in der Luftzuführungsmündung 8 und hat ein Innengewinde 13 für den Anschluss einer nicht dargestellten Luftzuführungsleitung.

Die spiralförmigen Luftführungskanäle 5 - 7 bewirken, dass die über die Leitung 12 zugeführte Druckluft sich gleichmässig radial nach aussen über die Lagerfläche 4 verteilt, so dass ein gleichmässig breiter Luftspalt zwischen dieser Lagerfläche 4 und einer nicht dargestellten Lagergegenfläche entsteht. Oertliche Druckerhöhungen, z.B. durch Fehler in der Lagergegenfläche oder durch eine Stauwirkung bei Bewegung des Lagerkörpers parallel zur Ebene der Lagerfläche, werden durch die Luftführungskanäle sofort ausgeglichen. Die Höhe oder Tiefe der Luftführungskanäle 5 - 7 ist in der Zeichnung vergrössert wiedergegeben und beträgt beispielsweise 0,02 mm. Ihre Herstellung kann beispielsweise durch Aetzen erfolgen.

Vorteilhaft nimmt der Querschnitt, d.h. die Breite und/ oder die Tiefe der Luftführungskanäle radial nach aussen zu, so dass sich in dieser Richtung der Luftdruck in den Kanälen verringert und die nach aussen abströmende Luft nicht zu Vibrationen führt. Zur Vermeidung von Vibrationen ist weiterhin die Anzahl der Luftführungskanäle vorteilhaft ungerade und für die Stabilität der Position des Lagerkörpers sind mindestens drei Luftführungskanäle vorhanden.

Von Bedeutung ist auch der Verlauf aller Luftführungskanäle, ausgehend von der Zuströmöffnung 12' zu der Lagerfläche, um einen Winkel von mehr als 360°. Auf diese Weise ist gewährleistet, dass ein die Lagerfläche verletzender Kratzer, der sich über die Lagerfläche erstreckt, alle Luftkanäle beeinflusst und somit die gleichmässige Druckverteilung aufrechterhalten bleibt.

Das Ausführungsbeispiel nach den Fig. 2 und 3 unterscheidet sich von demjenigen nach Fig. 1 durch eine die Lagerfläche 4' umschliessende Luftabführungsöffnung 14, die auch als Saugkanal bezeichnet werden kann, da sie über einen nach aussen mündenden Kanal 15 mit einer Unterdruckquelle verbunden ist. Ein Innengewinde 16 des Kanals 15 dient dem Anschluss einer nicht dargestellten, zu der Unterdruckquelle führenden Saugleitung. Die dem Ausführungsbeispiel nach Fig. 1 entsprechenden Teile haben die gleichen, jedoch apostrophierten Bezugsziffern.

Die Saugwirkung des Luftabführungskanals 14 wirkt somit der Druckwirkung der über den Kanal 12 zugeführten und über die Lagerfläche 4 strömenden Druckluft entgegen, so dass durch die kombinierte Kraftwirkung sich ein enger Luftspalt bei hoher Lastaufnahmefähigkeit des Lagers verwirklichen lässt. Der Lagerkörper ist deshalb besonders für ein Präzisionslager geeignet.

**Patentansprüche**

1. Lagerkörper für Luftlagerungen mit einer ebenen Lagerfläche (4, 4') für die translatorische Bewegung relativ zu einer Lagergegenfläche, einer zentral in die Lagerfläche mündenden Luftzuführöffnung (8, 8') und mehreren von der Luftzuführöffnung spiralförmig in der Lagerfläche nach aussen verlaufenden, im Querschnitt flachen Luftführungskanälen (5-7, 5'-7'), dadurch gekennzeichnet, dass die Luftführungskanäle (5-7, 5'-7'), ausgehend von der Zuströmöffnung (12') in der Lagerfläche (4, 4'), sich um einen Winkel von mehr als 360° erstrecken.

2. Lagerkörper nach Anspruch 1, dadurch gekennzeichnet, dass die Anzahl der Luftführungskanäle ungerade ist.

3. Lagerkörper nach Anspruch 1, dadurch gekennzeichnet, dass die Luftführungskanäle die Form von logarithmischen Spiralen haben.

4. Lagerkörper nach einem der Ansprüche 1 bis 3, dadurch gekennzeichnet, dass die Luftführungskanäle (5 - 7; 5' - 7') mit Abstand vom äusseren Umfang der Lagerfläche (4, 4') enden.

5. Lagerkörper nach einem der Ansprüche 1 bis 4, gekennzeichnet, durch eine zur Luftführungsöffnung konzentrische, die Lagerfläche kanalförmig umschliessende, an eine Unterdruckquelle anschliessbare Luftabführungsöffnung (14).

6. Lagerkörper nach einem der Ansprüche 1 bis 5, dadurch gekennzeichnet, dass die Tiefe der Luftführungskanäle (5 - 7; 5' - 7') mindestens angenähert 0,02 mm beträgt.

7. Lagerkörper nach einem der Ansprüche 1 bis 6, dadurch gekennzeichnet, dass die Breite der Luftführungskanäle in Richtung zum äusseren Umfang des Lagerkörpers zunimmt.

8. Lagerkörper nach einem der Ansprüche 1 bis 6, dadurch gekennzeichnet, dass die Breite und Tiefe der Luftführungskanäle in Richtung zum äusseren Umfang des Lagerkörpers zunehmen.

**Claims**

1. An air bearing body comprising a planar bearing surface (4, 4') for translatory movement relativ to a mating bearing surface, an air supply aperture (8, 8') opening on the center portion of said bearing surface and a plurality of shallow air circulation ducts (5-7, 5'-7') on ssaid bearing surface extending along spiral paths from said air supply aperture, wherein said air circulation ducts (5-7, 5'-7') extend from said air supply aperture (12') in said bearing surface (4, 4') by an angle of more than 360°.

2. An air bearing body according to claim 1, wherein the number of air circulation paths is uneven.

3. An air bearing body according to claim 1, wherein the air circulation paths are shaped as logarithmic spirals.

4. An air bearing body according to one of claims 1 to 3, wherein said air circulation paths (5-7, 5'-7') terminate at a distance from the outer periphery of said bearing surface (4, 4').

5. An air bearing body according to one of claims 1 to 4, comprising an air removal opening (14) for coupling to a vacuum source which is concentric with said air supply aperture and which surrounds said bearing surface in form of a duct.

6. An air bearing body according to one of claims 1 to 5, wherein the depth of said air circulation ducts (5-7, 5'-7') is at least approximately 0.02 mm.

7. An air bearing body according to one of claims 1 to 6, wherein the width of said air circulation ducts increases with increasing proximity to the periphery of the bearing body.

8. An air bearing body according to one of claims 1 to 6, wherein the width and depth of said air circulation ducts increase with increasing proximity to the periphery of the bearing body.

**Revendications**

1. Elément de palier pour sustentation aérostatique comprenant une surface d'appui plane (4, 4') pour le mouvement de translation par rapport à une contre-surface d'appui, un orifice d'amenée d'air (8, 8') débouchant au centre de la surface d'appui et plusieurs conduits d'amenée d'air (5 à 7, 5' à 7') qui ont une section de forme plate et vont suivant des spirales ménagées dans la surface d'appui depuis l'orifice d'amenée d'air vers l'extérieur, caractérisé en ce que les conduits d'amenée d'air (5 à 7, 5' à 7') ménagés dans la surface d'appui (4, 4') à partir de l'orifice d'amenée d'air (12') s'étendent sur un angle de plus de 360°.

2. Elément de palier selon la revendication 1, caractérisé en ce que le nombre des conduits d'amenée de l'air est impair.

3. Elément de palier selon la revendication 1, caractérisé en ce que les conduits d'amenée d'air ont la forme des spirales logarithmiques.

4. Elément de palier selon l'une des revendications 1 à 3, caractérisé en ce que les conduits d'amenée d'air (5 à 7, 5' à 7') se terminent à une certaine distance du contour extérieur de la surface d'appui (4, 4').

5. Elément de palier selon l'une des revendications 1 à 4, caractérisé en ce qu'il comporte un orifice (14) d'évacuation de l'air qui est concentrique à l'orifice d'entrée de l'air, entoure en forme de conduit la surface d'appui et peut être relié à une source produisant une dépression.

6. Elément de palier selon l'une des revendications 1 à 5, caractérisé en ce que la profondeur des conduits d'amenée d'air (5 à 7, 5' à 7') est au moins égale à 0,02 mm environ.

7. Elément de palier selon l'une des revendications 1 à 6, caractérisé en ce que la largeur des conduits d'amenée d'air, augmente dans la direction du contour extérieur du corps d'appui.

8. Elément de palier selon l'une des revendications 1 à 6, caractérisé en ce que la largeur et la profondeur des conduits d'amenée d'air augmentent dans la direction du contour extérieur du corps d'appui.

FIG. 1

FIG. 2

FIG. 3